# FASCICULE DE BREVET EUROPEEN

(11) **EP 0 822 117 B1**
(45) Date de publication et mention de la délivrance du brevet: **07.06.2000**
(21) Numéro de dépôt: 97401812.9
(22) Date de dépôt: 28.07.1997
(51) Int. Cl.: B60N 2/48

(54) **Siège de véhicule comportant un appui-tête, et appui-tête pour siège de véhicule**
Fahrzeugsitz mit Kopfstütze und Kopfstütze für Fahrzeugsitze
Vehicle seat with a head-rest and head-rest for vehicle seat

(30) Priorité: 31.07.1996 FR 9609642
(43) Date de publication de la demande: 04.02.1998
(73) Titulaire: BERTRAND FAURE EQUIPEMENTS S.A., 92100 Boulogne (FR)
(72) Inventeur: Courtois, Bernard, 91150 Morigny (FR); Castro, Adolfo, 94260 Fresnes (FR)
(74) Mandataire: Burbaud, Eric

(56) Documents cités:
- DE-A- 2 902 246
- FR-A- 2 413 236
- FR-A- 2 606 345
- US-A- 4 256 341

## Description

La présente invention est relative aux sièges de véhicules comportant des appuis-tête, et aux appuis-tête pour sièges de véhicules.

Plus particulièrement, l'invention concerne un siège de véhicule comportant un dossier qui est prolongé vers le haut par un appui-tête doté d'une face avant destinée à servir d'appui à la nuque d'un utilisateur, cet appui-tête étant supporté par au moins une broche rigide qui coulisse verticalement dans une douille solidaire du dossier avec un certain jeu de pivotement vers l'avant, l'appui-tête étant sollicité angulairement vers l'arrière par un ressort porté par la douille et agissant sur la broche, vers une position de repos arrière où un organe d'arrêt solidaire de la douille empêche la broche de coulisser verticalement, cet organe d'arrêt coopérant, lorsque l'appui-tête est dans sa position de repos, avec des crans qui sont formés le long de la broche, et l'appui-tête étant déplaçable angulairement vers l'avant sous l'action d'un utilisateur en entraînant la broche contre la sollicitation du ressort vers une position de réglage où la broche peut coulisser verticalement dans la douille.

Le document US-A-4 390 209 divulgue un exemple d'un tel siège de véhicule.

Ce siège de véhicule présente toutefois l'inconvénient d'impliquer :
- un montage relativement complexe de la broche de l'appui-tête à l'intérieur de la douille correspondante,
- et une relativement faible résistance de l'organe d'arrêt.

La présente invention a notamment pour but de pallier ces inconvénients.

A cet effet, selon l'invention, un siège de véhicule du genre en question est caractérisé en ce que le ressort présente des première et deuxième branches sensiblement horizontales qui pénètrent à l'intérieur de ladite douille en encadrant la broche, la première branche étant emboîtée sensiblement sans jeu dans la douille et constituant l'organe d'arrêt susmentionné, la deuxième branche étant reçue dans la douille avec un certain jeu horizontal et s'appliquant élastiquement contre la broche en sollicitant l'appui-tête vers l'arrière pour appliquer les crans de ladite broche contre la première branche du ressort.

Dans des modes de réalisation préférés, on peut éventuellement avoir recours en outre à l'une et/ou à l'autre des dispositions suivantes :
- l'organe d'arrêt est disposé vers l'arrière de la broche, les crans de la broche étant orientés vers l'arrière ;
- l'appui-tête est supporté par deux broches parallèles qui coulissent chacune dans une douille dotée d'un ressort et qui présentent chacune des crans coopérant avec la première branche du ressort correspondant;
- la broche comporte une partie inférieure qui présente une butée unique conformée pour coopérer avec la deuxième branche du ressort, afin d'empêcher la broche de sortir de la douille ;
- la douille comporte une partie fixe et un coulisseau qui est déplaçable par rapport à la partie fixe sous l'action d'un poussoir accessible à un utilisateur au-dessus du dossier, le coulisseau étant adapté pour coopérer avec la deuxième branche du ressort pour déplacer cette deuxième branche horizontalement lorsque le poussoir est actionné, de façon à supprimer alors toute coopération entre la deuxième branche du ressort et la butée de la broche;
- le coulisseau est déplaçable verticalement par rapport à la partie fixe de la douille sous l'action du poussoir, le coulisseau présentant au moins une surface de came qui est apte à coopérer avec la deuxième branche du ressort pour écarter horizontalement cette deuxième branche par rapport à la première branche lorsque le poussoir est actionné ;
- le ressort se présente sous la forme d'une épingle élastique pliée sensiblement en forme de U, les première et deuxième branches de ce ressort formant chacune une branche élastique du U;
- la douille présente, d'une part, un guide inférieur qui s'étend verticalement sur une faible longueur et qui reçoit la broche avec un faible jeu en constituant ainsi un point de pivot inférieur pour cette broche, la douille formant par ailleurs, au-dessus du guide inférieur, une partie supérieure qui reçoit la broche avec un jeu plus important et qui a une section horizontale intérieure oblongue présentant un axe longitudinal orienté d'avant en arrière ;
- les crans sont constitués par des indentations superposées séparées les unes des autres par des bossages saillants arrondis ;
- la broche comporte un axe longitudinal et les crans qui coopèrent avec la première branche du ressort présentent chacun d'une part une face de butée supérieure qui est sensiblement perpendiculaire à l'axe de la broche, et d'autre part une face inclinée inférieure qui s'étend en biais vers l'arrière et vers le bas ;
- les première et deuxième branches du ressort sont reliées entre elles, de part et d'autre de la broche, par deux jambages élastiques qui s'étendent sensiblement verticalement vers le bas à partir desdites première et deuxième branches, la deuxième branche du ressort étant située à un niveau supérieur à la première branche, la douille comportant un manchon intérieur qui est entouré par une chemise extérieure rigide et qui est traversé par un puits sensiblement vertical dans lequel coulisse la broche, le manchon intérieur présentant une partie arrière qui est percée horizontalement par un canal de guidage débouchant d'une part vers l'arrière de la douille et d'autre part dans le puits dudit manchon, ce canal de guidage étant situé au même niveau que la deuxième branche du ressort et s'étendant sur une largeur qui correspond à ladite deuxième branche, le coulisseau étant monté dans le canal de guidage pour pouvoir coopérer avec ladite deuxième branche du ressort, la partie arrière du manchon présentant en outre une rainure horizontale qui reçoit la première branche du ressort et qui présente une partie centrale débouchant dans le puits du manchon, de sorte que la première branche du ressort présente elle-même une partie centrale faisant saillie dans le puits du manchon pour coopérer avec les crans formés à l'arrière de la broche, la chemise de la douille recouvrant ladite rainure horizontale de façon à emprisonner la deuxième branche du ressort dans cette rainure, et la partie arrière du manchon présentant en outre deux fentes verticales qui communiquent avec le canal de guidage et qui sont disposées en correspondance avec les deux jambages élastiques du ressort, de façon à permettre l'engagement de la deuxième branche du ressort dans ledit canal de guidage lors du montage de la douille ;
- le manchon intérieur de la douille présente une tête supérieure élargie dans laquelle est formé le canal de guidage qui reçoit le coulisseau, et ce manchon présentant en outre une extrémité inférieure qui est pourvue de crochets d'encliquetage adaptés pour solidariser la chemise extérieure avec ledit manchon intérieur lorsque ce manchon intérieur est emboîté par coulissement dans ladite chemise extérieure.

Par ailleurs, l'invention a également pour objet un ensemble formant appui-tête pour un siège de véhicule tel que défini ci-dessus, cet ensemble comprenant l'appui-tête proprement dit, la ou les broche(s) de support de cet appui-tête, la ou les douille(s) correspondante(s), les moyens de blocage et les moyens élastiques.

D'autres caractéristiques et avantages de l'invention apparaîtront au cours de la description détaillée suivante de deux de ses formes de réalisation, données à titre d'exemples non limitatifs, en regard des dessins joints.

Sur les dessins :
- la figure 1 est une vue schématique d'un siège de véhicule selon l'invention,
- la figure 2 est une vue en coupe verticale montrant le montage d'une des broches qui supporte l'appui-tête du siège de la figure 1, selon une première forme de réalisation de l'invention,
- les figures 3 et 4 sont des vues en coupe, respectivement selon les lignes III-III et IV-IV de la figure 2,
- la figure 5 est une vue éclatée montrant une des broches qui supportent l'appui-tête du siège de la figure 1, avec la douille correspondante, selon une deuxième forme de réalisation de l'invention,
- la figure 6 est une vue en perspective du manchon intérieur appartenant à la douille représentée sur la figure 5,
- et les figures 7 à 9 sont des vues en coupe verticale montrant la broche et la douille de la figure 5, respectivement en position normale d'utilisation, en cours de réglage de la hauteur de l'appui-tête, et en cours d'enlèvement de l'appui-tête.

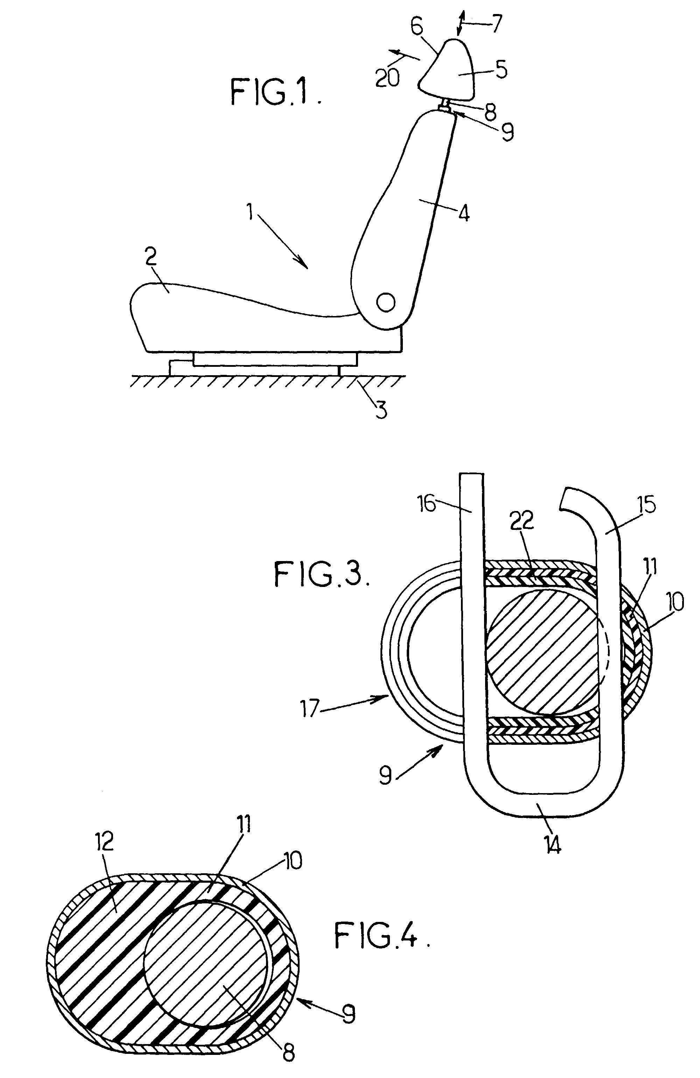

La figure 1 représente un siège 1 de véhicule automobile comprenant, d'une part, une assise 2 montée sur le plancher 3 du véhicule et, d'autre part, un dossier 4 monté sur l'assise 2 et prolongé vers le haut par un appui-tête 5.

Cet appui-tête présente une face avant 6 destinée à servir d'appui à la nuque d'un utilisateur du siège, et ledit appui-tête est réglable en hauteur dans la direction de la double flèche 7, de façon que l'appui de la nuque de l'utilisateur sur la face avant 6 se fasse dans de bonnes conditions de confort.

A cet effet, l'appui-tête 5 est supporté par deux broches métalliques 8, pleines ou tubulaires, dont une seule est visible sur la figure 1, qui s'étendent vers le bas à partir de l'appui-tête et pénètrent dans la partie supérieure du dossier 4, où elles coulissent verticalement dans des douilles 9, solidaires du dossier 4.

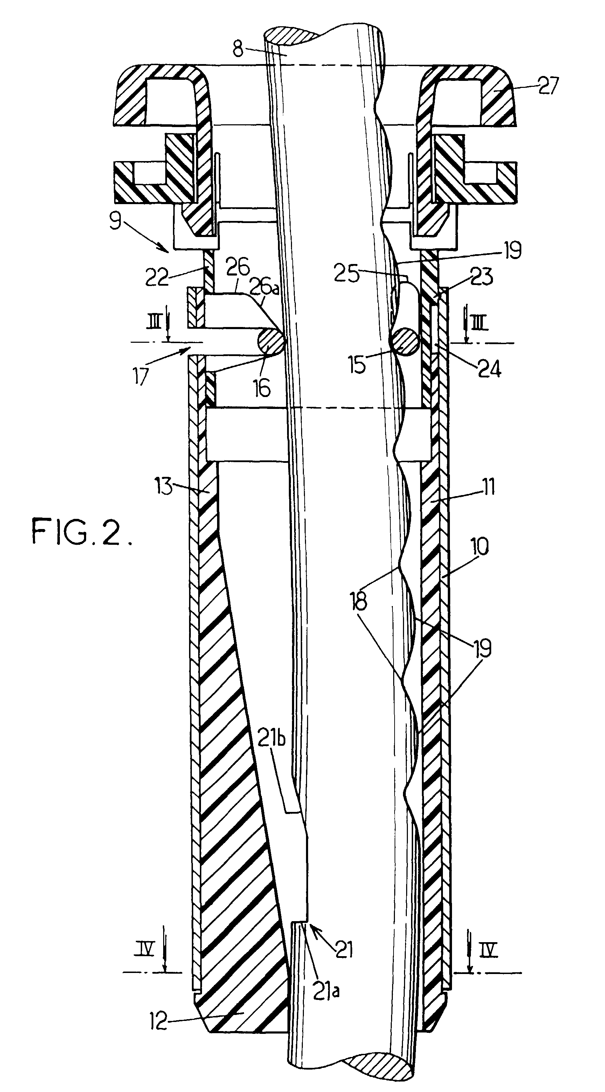

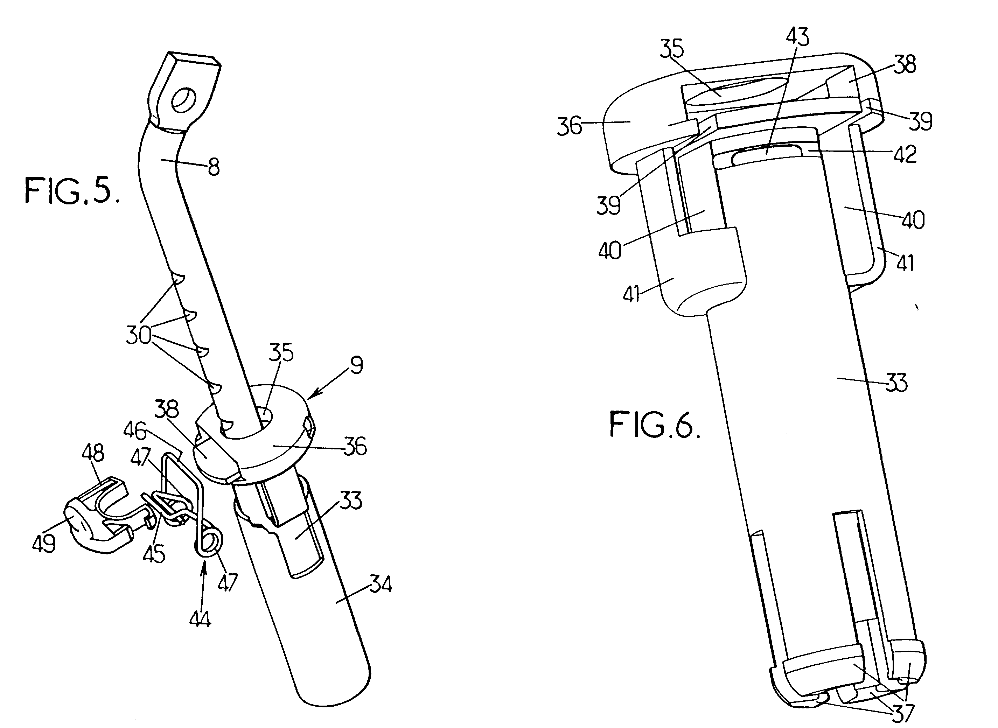

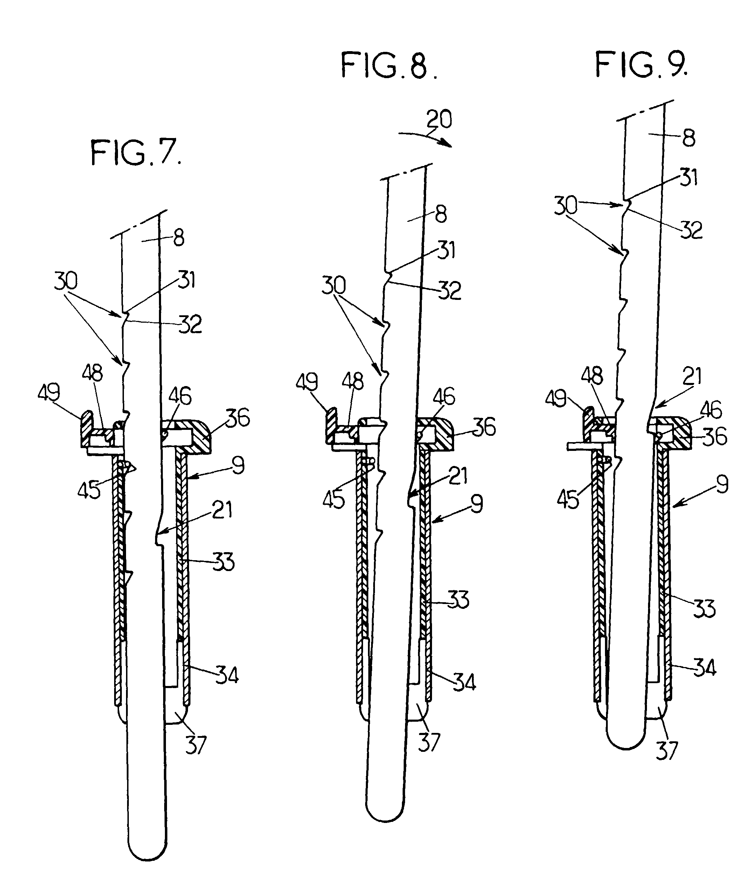

Comme représenté plus en détail sur les figures 2 à 4, chaque douille 9 comprend, selon une première forme de réalisation de l'invention :
- d'une part, une chemise métallique externe 10, qui présente une forme tubulaire ayant une section horizontale oblongue dont l'axe longitudinal est orienté d'avant en arrière, cette chemise métallique étant fixée à l'armature métallique (non représentée) du dossier 4, par exemple par soudage,
- et un manchon interne 11 en matière plastique qui est disposé à l'intérieur de la chemise métallique 10, le manchon 11 présentant une partie inférieure 12 qui s'étend sur une faible hauteur et qui reçoit la partie inférieure de la broche 8 avec un faible jeu, en constituant ainsi un point de pivot pour cette broche, et le passage intérieur du manchon 11 s'évasant vers le haut à partir de la partie 12 pour former une partie supérieure 13 tubulaire présentant une section intérieure oblongue dont l'axe longitudinal est orienté d'avant en arrière, ce qui permet à la broche 8 et à l'appui-tête 5 de pivoter d'avant en arrière.

Par ailleurs, au voisinage de l'extrémité supérieure de chaque douille 9, la chemise métallique 10 et le manchon 11 reçoivent une pièce métallique élastique 14 en forme d'épingle, qui présente une forme générale de U comportant deux branches latérales 15, 16, qui sont toutes les deux emboîtées dans la chemise 10 et le manchon 11 et pénètrent dans le passage intérieur délimité par le manchon 11.

La première branche 15 de chaque épingle 14 est emboîtée sensiblement sans jeu dans la chemise 10 et le manchon 11, tandis que la deuxième branche 16 de l'épingle est emboîtée dans une fente horizontale 17 ménagée dans la chemise 10 et le manchon 11, de sorte que cette deuxième branche 16 peut s'écarter élastiquement de la première branche 15.

Par ailleurs, chaque broche 8 présente, le long de sa hauteur, des ondulations qui sont orientées vers l'arrière et qui sont constituées par des indentations 18 superposées, séparées les unes des autres par des bossages arrondis 19.

Sous l'effet de l'appui élastique exercé par la deuxième branche 16 de chaque épingle 14 contre la partie avant de la broche 8 correspondante, la partie arrière de cette broche vient en appui contre la première branche 15 de l'épingle élastique : cette branche 15 est donc engagée dans l'une des indentations 18 de la broche 8, en bloquant ainsi le coulissement vertical de cette broche dans la douille 9.

Lorsque l'utilisateur du siège appuie sa nuque contre la face avant 6 de l'appui-tête, volontairement ou suite à un choc arrière subi par le véhicule, cet appui vient renforcer le blocage des deux broches 8 de l'appui-tête par les premières branches 15 des épingles élastiques 14 correspondantes.

Par ailleurs, lorsque l'utilisateur du siège souhaite régler la hauteur de l'appui-tête, il tire l'appui-tête 5 en le faisant pivoter vers l'avant, dans le sens de la flèche 20 représentée sur la figure 1, contre la sollicitation élastique des deuxièmes branches 16 des épingles 14 correspondant aux deux broches de l'appui-tête.

Au cours de ce mouvement, chaque broche 8, ainsi que la deuxième branche 16 de l'épingle 14 correspondante, s'écarte de la première branche 15 de ladite épingle, de sorte que les indentations 18 et les bossages 19 de ladite broche ne coopèrent plus avec la première branche 15 de l'épingle 14 correspondante.

L'utilisateur peut alors régler la hauteur de l'appui-tête en faisant coulisser les broches 8 dans les douilles 9.

Eventuellement, l'utilisateur pourrait régler la hauteur de l'appui-tête sans tirer cet appui-tête vers l'avant, la première branche 15 de l'épingle élastique 14 glissant alors sur les indentations 18 et les bossages 19 au cours du mouvement vertical des broches 8 dans les douilles 9.

Afin d'éviter que les broches 8 ne sortent involontairement des douilles 9, au cours du réglage en hauteur de l'appui-tête ou suite à un choc avant subi par le véhicule, chaque broche 8, ou de préférence un seule des deux broches 8, comporte avantageusement dans sa partie inférieure une butée orientée vers l'avant qui coopère avec la deuxième branche 16 de l'épingle 14 correspondante pour limiter le déplacement de la douille vers le haut.

Cette butée peut être constituée par exemple par une échancrure 21 qui présente, d'une part, une face de butée 21a, qui s'étend dans un plan radial et qui est orienté vers le haut, et d'autre part, une face inclinée 21b qui est orientée en biais vers l'avant et vers le bas.

Par ailleurs, la douille 9, correspondant à la broche 8 qui présente l'échancrure 21, comporte dans sa partie supérieure un coulisseau 22 en matière plastique qui est emboîté à frottement doux à l'intérieur du manchon 11.

Ce coulisseau 22 est guidé en coulissement vertical à l'intérieur du manchon 11, par exemple au moyen d'une nervure 23 dudit coulisseau engagée dans une rainure 24 correspondante du manchon 11.

Par ailleurs, le coulisseau 22 est traversé par les deux branches 15, 16 de l'épingle élastique 14, ledit coulisseau présentant d'une part, une lumière oblongue verticale 25 au niveau des deux extrémités de la première branche 15 de l'épingle élastique, et d'autre part, une échancrure 26 ouverte vers l'avant qui reçoit les deux extrémités de la deuxième branche 16 de l'épingle élastique.

L'échancrure 26 du coulisseau présente, au niveau des deux extrémités de la deuxième branche 16 de l'épingle élastique, ou au moins au voisinage de l'extrémité libre de cette deuxième branche 16, une surface de came 26a inclinée vers le haut et vers l'avant.

Cette surface de came 26a est prévue pour écarter la deuxième branche 16 par rapport à la première branche 15 de l'épingle élastique lorsque le coulisseau 22 est déplacé vers le bas sous l'action d'un bouton-poussoir 27 qui entoure la broche 8 et qui est accessible à un utilisateur en partie supérieure du dossier 4 du siège, ce bouton-poussoir 27 pouvant être le cas échéant réalisé sous la forme d'une pièce rapportée sur le coulisseau 22, comme représenté sur les dessins.

Ainsi, en appuyant sur le bouton-poussoir 27, l'utilisateur peut empêcher la deuxième branche 16 de l'épingle 14 de coopérer avec l'échancrure 21, lorsqu'il souhaite démonter l'appui-tête 5.

Dans la deuxième forme de réalisation de l'invention, représentée sur les figures 5 à 9, les deux broches 8 de l'appui-tête présentent des crans 30 disposés vers l'arrière de la broche 8, chacun de ces crans 30 pouvant par exemple présenter une face de butée supérieure 31 sensiblement perpendiculaire à l'axe longitudinal de la broche, et une face inclinée inférieure 32 orientée vers l'arrière et vers le bas (voir figures 7 à 9).

On notera que les crans 18 de la première forme de réalisation de l'invention pourraient éventuellement être remplacés par des crans similaires aux crans 30, et que les crans 30 de la deuxième forme de réalisation de l'invention pourraient éventuellement être remplacés par des crans similaires aux crans 18.

Par ailleurs, l'une des deux broches 8 de l'appui-tête comporte avantageusement une butée inférieure 21 dirigée vers l'avant et constituée par exemple, comme décrit ci-dessus, par une face de butée inférieure et par une face inclinée orientée en biais vers l'avant et vers le bas.

Par ailleurs, la douille 9 dans laquelle coulisse la broche 8 comporte d'une part un manchon intérieur 33 qui peut être réalisé par exemple en matière plastique, et d'autre part une chemise extérieure rigide 34 qui peut être réalisée par exemple en métal et qui reçoit le manchon 33 par emboîtement.

Le manchon intérieur 33 délimite un puits 35 sensiblement vertical dans lequel coulisse la broche 8 correspondante, ce puits 35 étant conformé pour permettre à la broche 8 de se déplacer au moins d'avant en arrière.

Comme représenté sur la figure 6, le manchon 33 s'étend verticalement entre d'une part une tête élargie 36, qui est disposée sur le dessus du dossier 4, et d'autre part une extrémité inférieure qui est fendue axialement en formant quatre crochets élastiques 37 faisant saillie radialement vers l'extérieur et adaptés pour venir s'encliqueter sous la chemise extérieure 34 lors de l'emboîtement du manchon 33 dans ladite chemise.

La tête élargie 36 du manchon 33 est percée horizontalement par un canal de guidage 38 de section rectangulaire, ce canal débouchant d'une part vers l'avant de la tête élargie 36, et d'autre part à l'intérieur du puits 35 du manchon.

A ses deux extrémités latérales, le canal de guidage 38 communique en outre avec deux fentes 39 verticales qui sont ménagées dans la tête élargie 36 et qui débouchent vers le bas dans deux logements latéraux 40 recouverts partiellement chacun par une paroi latérale 41.

De plus, dans la face arrière du manchon 33 est creusée une rainure horizontale 42, dont la partie centrale 43 débouche dans le puits 35.

Par ailleurs, dans le manchon 33 est monté un ressort 44 en fil métallique élastique, qui est bien visible sur la figure 5 et qui comporte :
- une première branche horizontale 45, en l'occurrence constituée par deux portions parallèles de fil métallique, ou éventuellement par un seul tronçon de fil,
- une deuxième branche horizontale 46, parallèle à la première branche 45 et disposée à un niveau supérieur à ladite première branche,
- et deux jambages élastiques 47 qui relient entre elles les première et deuxième branches et qui s'étendent vers le bas à partir des extrémités desdites première et deuxième branches, de part et d'autre du ressort 44.

Lors du montage de la douille 9, la première branche 45 du ressort est engagée dans le canal de guidage 38 à partir de la face arrière du manchon 33, pendant que les jambages élastiques 47 s'engagent dans les fentes 39 et les logements 40. De plus, la première branche 45 du ressort s'engage dans la rainure 42, la partie centrale de cette première branche 45 faisant ainsi saillie dans le puits 35.

Après montage du ressort 44, le manchon 33 est emboîté dans la chemise correspondante 34, laquelle chemise vient recouvrir la rainure 42 en emprisonnant ainsi la première branche 45 du ressort dans ladite rainure.

Par la suite, on emboîte dans le puits 35 la broche 8 correspondante, la première branche 45 du ressort coopérant alors avec les crans 30 de cette broche, et la deuxième branche 46 du ressort appuyant sur l'avant de la broche 8 en sollicitant les crans 30 contre la première branche 45 du ressort (figure 7).

De plus, la deuxième branche 46 d'un des ressorts 44 peut le cas échéant coopérer avec la butée 21 de la broche correspondante pour éviter une éjection involontaire de la broche 8 hors de la douille 9.

Enfin, un coulisseau 48 présentant une forme de U, et actionnable par un poussoir 49, est monté dans le canal de guidage 38 correspondant à la broche 8 qui présente la butée 21, de façon à pouvoir repousser vers l'avant la deuxième branche 46 du ressort.

Grâce à cette disposition, lorsque l'utilisateur du siège souhaite abaisser l'appui-tête, il tire cet appui-tête vers l'avant dans la direction de la flèche 20 (figure 8), ce qui dégage les crans 30 de la première branche 45 du ressort, après quoi il peut faire coulisser verticalement ledit appui-tête.

Pour relever l'appui-tête, l'utilisateur peut procéder de même, ou simplement tirer verticalement sur cet appui-tête, la remontée de l'appui-tête étant toutefois limitée par la butée 21.

Par ailleurs, lorsque l'utilisateur veut entièrement démonter l'appui-tête, il appuie sur le poussoir 49, ce qui repousse la deuxième branche 46 du ressort suffisamment vers l'avant pour empêcher cette deuxième branche de coopérer avec la butée 21 (figure 9), ce qui permet de sortir la broche 8 de la douille 9.

## Revendications

1. Siège de véhicule comportant un dossier (4) qui est prolongé vers le haut par un appui-tête (5) doté d'une face avant (6) destinée à servir d'appui à la nuque d'un utilisateur, cet appui-tête étant supporté par au moins une broche rigide (8) qui coulisse verticalement dans une douille (9) solidaire du dossier (4) avec un certain jeu de pivotement vers l'avant, l'appui-tête (5) étant sollicité angulairement vers l'arrière par un ressort (15, 16 ; 45, 46) porté par la douille (9) et agissant sur la broche (8), vers une position de repos arrière où un organe d'arrêt (15, 45) solidaire de la douille (9) empêche la broche (8) de coulisser verticalement, cet organe d'arrêt coopérant, lorsque l'appui-tête (5) est dans sa position de repos, avec des crans (18, 30) qui sont formés le long de la broche, et l'appui-tête étant déplaçable angulairement vers l'avant sous l'action d'un utilisateur en entraînant la broche (8) contre la sollicitation du ressort (15, 16 ; 45, 46) vers une position de réglage où la broche (8) peut coulisser verticalement dans la douille (9),
**caractérisé en ce que** le ressort présente des première et deuxième branches (15, 16 ; 45, 46) sensiblement horizontales qui pénètrent à l'intérieur de ladite douille en encadrant la broche (8), la première branche (15, 45) étant emboîtée sensiblement sans jeu dans la douille (9) et constituant l'organe d'arrêt susmentionné, la deuxième branche (16, 46) étant reçue dans la douille (9) avec un certain jeu horizontal et s'appliquant élastiquement contre la broche (8) en sollicitant l'appui-tête (5) vers l'arrière pour appliquer les crans (18) de ladite broche contre la première branche (15, 45) du ressort.

2. Siège selon la revendication 1, dans lequel l'organe d'arrêt (15, 45) est disposé vers l'arrière de la broche (8), les crans (18, 30) de la broche étant orientés vers l'arrière.

3. Siège selon la revendication 1 ou la revendication 2, dans lequel l'appui-tête (5) est supporté par deux broches parallèles (8) qui coulissent chacune dans une douille (9) dotée d'un ressort et qui présentent chacune des crans (18, 30) coopérant avec la première branche (15, 45) du ressort correspondant.

4. Siège selon l'une quelconque des revendications précédentes, dans lequel la broche (8) comporte une partie inférieure qui présente une butée (21) unique conformée pour coopérer avec la deuxième branche (16, 46) du ressort, afin d'empêcher la broche de sortir de la douille (9) .

5. Siège selon la revendication 4, dans lequel la douille (9) comporte une partie fixe (10, 11 ; 33, 34) et un coulisseau (22, 48) qui est déplaçable par rapport à la partie fixe (10, 11 ; 33, 34) sous l'action d'un poussoir (27, 49) accessible à un utilisateur au-dessus du dossier (4), le coulisseau (22, 48) étant adapté pour coopérer avec la deuxième branche (16, 46) du ressort pour déplacer cette deuxième branche horizontalement lorsque le poussoir (27, 49) est actionné, de façon à supprimer alors toute coopération entre la deuxième branche (16, 46) du ressort et la butée (21) de la broche.

6. Siège selon la revendication 5, dans lequel le coulisseau (22) est déplaçable verticalement par rapport à la partie fixe (10, 11) de la douille sous l'action du poussoir (27), le coulisseau (22) présentant au moins une surface de came (26a) qui est apte à coopérer avec la deuxième branche (16) du ressort pour écarter horizontalement cette deuxième branche par rapport à la première branche (15) lorsque le poussoir (27) est actionné.

7. Siège selon l'une quelconque des revendications précédentes, dans lequel le ressort se présente sous la forme d'une épingle élastique (14) pliée sensiblement en forme de U, les première et deuxième branches (15, 16) de ce ressort formant chacune une branche élastique du U.

8. Siège selon l'une quelconque des revendications précédentes, dans lequel la douille (9) présente, d'une part, un guide inférieur (12) qui s'étend verticalement sur une faible longueur et qui reçoit la broche (8) avec un faible jeu en constituant ainsi un point de pivot inférieur pour cette broche, la douille (9) formant par ailleurs, au-dessus du guide inférieur, une partie supérieure (13) qui reçoit la broche avec un jeu plus important et qui a une section horizontale intérieure oblongue présentant un axe longitudinal orienté d'avant en arrière.

9. Siège selon l'une quelconque des revendications précédentes, dans lequel les crans sont constitués par des indentations (18) superposées séparées les unes des autres par des bossages saillants (19) arrondis.

10. Siège selon l'une quelconque des revendications 1 à 8, dans lequel la broche (8) comporte un axe longitudinal et les crans (30) qui coopèrent avec la première branche (45) du ressort présentent chacun d'une part une face de butée supérieure (31) qui est sensiblement perpendiculaire à l'axe de la broche (8), et d'autre part une face inclinée inférieure (32) qui s'étend en biais vers l'arrière et vers le bas.

11. Siège selon la revendication 5, dans lequel les première et deuxième branches (45, 46) du ressort sont reliées entre elles, de part et d'autre de la broche (8), par deux jambages élastiques (47) qui s'étendent sensiblement verticalement vers le bas à partir desdites première et deuxième branches (45, 46), la deuxième branche (46) du ressort étant située à un niveau supérieur à la première branche (45), la douille (9) comportant un manchon intérieur (33) qui est entouré par une chemise extérieure (34) rigide et qui est traversé par un puits (35) sensiblement vertical dans lequel coulisse la broche (8), le manchon intérieur (33) présentant une partie arrière qui est percée horizontalement par un canal de guidage (38) débouchant d'une part vers l'arrière de la douille (9) et d'autre part dans le puits (35) dudit manchon, ce canal de guidage étant situé au même niveau que la deuxième branche (46) du ressort et s'étendant sur une largeur qui correspond à ladite deuxième branche (46), le coulisseau (48) étant monté dans le canal de guidage pour pouvoir coopérer avec ladite deuxième branche (46) du ressort, la partie arrière du manchon (33) présentant en outre une rainure horizontale (42) qui reçoit la première branche (45) du ressort et qui présente une partie centrale (43) débouchant dans le puits (35) du manchon, de sorte que la première branche (45) du ressort présente elle-même une partie centrale faisant saillie dans le puits du manchon pour coopérer avec les crans (30) formés à l'arrière de la broche (8), la chemise (34) de la douille recouvrant ladite rainure horizontale de façon à emprisonner la deuxième branche (46) du ressort dans cette rainure, et la partie arrière du manchon présentant en outre deux fentes verticales (39) qui communiquent avec le canal de guidage (38) et qui sont disposées en correspondance avec les deux jambages élastiques (47) du ressort, de façon à permettre l'engagement de la deuxième branche (46) du ressort dans ledit canal de guidage (38) lors du montage de la douille (9).

12. Siège selon la revendication 11, dans lequel le manchon intérieur (33) de la douille présente une tête supérieure (36) élargie dans laquelle est formé le canal de guidage (38) qui reçoit le coulisseau (48), et ce manchon présentant en outre une extrémité inférieure qui est pourvue de crochets d'encliquetage (37) adaptés pour solidariser la chemise extérieure (34) avec ledit manchon intérieur lorsque ce manchon intérieur est emboîté par coulissement dans ladite chemise extérieure.

13. Ensemble formant appui-tête pour un siège de véhicule selon l'une quelconque des revendications précédentes, cet ensemble comprenant l'appui-tête (15) proprement dit, la ou les broche(s) (8) de support de cet appui-tête, la ou les douille(s) (9) correspondante(s), les moyens de blocage (15) et les moyens élastiques (16).

## Patentansprüche

1. Fahrzeugsitz mit einer Rückenlehne (4), die nach oben durch eine Kopfstütze (5) verlängert ist, welche mit einer als Stütze für den Nacken eines Benutzers dienenden Vorderseite (6) versehen ist, wobei die Kopfstütze von mindestens einem starren Stift (8) getragen wird, der vertikal mit einem bestimmten Schwenk-Spiel nach vorne in einer mit der Rückenlehne (4) fest verbundenen Buchse (9) gleitet, wobei die Kopfstütze (5) winkelmäßig durch eine von der Buchse (9) getragene und auf den Stift (8) wirkende Feder (15, 16; 45, 46) nach hinten in eine hintere Ruhelage gedrückt wird, in der ein mit der Buchse (9) fest verbundenes Sperrorgan (15, 45) den Stift (8) am vertikalen Gleiten hindert, wobei das Sperrorgan in der Ruhelage der Kopfstütze (5) mit Einkerbungen (18, 30) entlang des Stiftes zusammenwirkt und die Kopfstütze winkelmäßig unter der Einwirkung eines Benutzers nach vorne verschiebbar ist, indem der Stift (8) gegen die Kraft der Feder (15, 16; 45, 46) in eine Einstell-Position gedrückt wird, in der der Stift (8) vertikal in der Buchse (9) gleiten kann,
**dadurch gekennzeichnet, dass** die Feder erste und zweite im Wesentlichen horizontale Arme (15, 16; 45, 46) aufweist, die ins Innere der Buchse hineinragen und dabei den Stift (8) umfassen, wobei der erste Arm (15, 45) im Wesentlichen ohne Spiel in die Buchse (9) eingeschoben ist und das oben erwähnte Sperrorgan darstellt und der zweite Arm (16, 46) mit einem bestimmten horizontalen Spiel in der Buchse (9) aufgenommen ist und elastisch gegen den Stift (8) drückt, so dass die Kopfstütze (5) nach hinten und die Einkerbungen (18) des Stifts gegen den ersten Arm (15, 45) der Feder gedrückt werden.

2. Sitz nach Anspruch 1, bei dem das Sperrorgan (15, 45) im hinteren Bereich des Stifts (8) angeordnet ist, wobei die Einkerbungen (18, 30) des Stifts nach hinten gerichtet sind.

3. Sitz nach Anspruch 1 oder 2, bei dem die Kopfstütze (5) von zwei parallelen Stiften (8) getragen wird, die jeweils in einer mit einer Feder versehenen Buchse (9) gleiten und Einkerbungen (18, 30) aufweisen, die mit dem ersten Arm (15, 45) der entsprechenden Feder zusammenwirken.

4. Sitz nach einem der vorhergehenden Ansprüche, bei dem der Stift (8) einen unteren Teil mit einem einzigen angeformten Anschlag (21) zum Zusammenwirken mit dem zweiten Arm (16, 46) der Feder aufweist, damit der Stift nicht aus der Buchse (9) gleiten kann.

5. Sitz nach Anspruch 4, bei dem die Buchse (9) einen festen Abschnitt (10, 11; 33, 34) und einen Schlitten (22, 48) aufweist, der gegenüber dem festen Abschnitt (10, 11,; 33, 34) mit Hilfe eines Drückers (27, 49) in Reichweite eines Benutzers oberhalb der Rückenlehne (4) verschiebbar ist, wobei der Schlitten (22, 48) mit dem zweiten Arm (16, 46) der Feder zusammenwirken kann, um diesen zweiten Arm horizontal zu verschieben, wenn der Drücker (27, 49) betätigt wird, so dass dann jegliche Zusammenwirkung zwischen dem zweiten Arm (16, 46) der Feder und dem Anschlag (21) des Stifts aufgehoben wird.

6. Sitz nach Anspruch 5, bei dem der Schlitten (22) vertikal gegenüber dem festen Abschnitt (10, 11) der Buchse unter der Einwirkung des Drückers (27) verschiebbar ist, wobei der Schlitten (22) mindestens eine Nockenfläche (26a) aufweist, die mit dem zweiten Arm (16) der Feder zusammenwirken kann, um diesen zweiten Arm horizontal gegenüber dem ersten Arm (15) zu spreizen, wenn der Drücker (27) betätigt wird.

7. Sitz nach einem der vorhergehenden Ansprüche, bei dem die Feder die Form eines elastischen Bügels (14) besitzt, der im wesentlichen U-förmig gebogen ist, wobei der erste und zweite Arm (15, 16) der Feder jeweils einen elastischen Arm des U bilden.

8. Sitz nach einem der vorhergehenden Ansprüche, bei dem die Buchse (9) zum einen eine untere Führung (12) aufweist, die sich vertikal über eine geringe Länge erstreckt und den Stift (8) mit einem geringen Spiel aufnimmt und so einen unteren Drehpunkt für diesen darstellt, wobei die Buchse (9) außerdem oberhalb der unteren Führung einen oberen Abschnitt (13) umfasst, der den Stift mit einem größeren Spiel aufnimmt und einen länglichen horizontalen Innenquerschnitt aufweist, dessen Längsachse von vorne nach hinten verläuft.

9. Sitz nach einem der vorhergehenden Ansprüche, bei dem die Einkerbungen durch übereinander liegende Auszahnungen (18) gebildet sind, die durch abgerundete vorspringende Ausbuchtungen (19) voneinander getrennt sind.

10. Sitz nach einem der Ansprüche 1 bis 8, bei dem der Stift (8) eine Längsachse aufweist und die Einkerbungen (30), die mit dem ersten Arm (45) der Feder zusammenwirken, jeweils zum einen eine obere Anschlagfläche (31) aufweisen, die im Wesentlichen senkrecht zur Achse des Stifts (8) verläuft, und zum anderen eine untere geneigte Fläche (32), die sich schräg nach hinten und unten erstreckt.

11. Sitz nach Anspruch 5, bei dem der erste und zweite Arm (45, 46) der Feder zu beiden Seiten des Stifts (8) durch zwei elastische Stützen (47) miteinander verbunden sind, die sich vom ersten und vom zweiten Arm (45, 46) im Wesentlichen vertikal nach unten erstrecken, wobei der zweite Arm (46) der Feder höher liegt als der erste Arm (45), wobei die Buchse (9) eine innere Muffe (33) aufweist, die von einem starren äußeren Mantel (34) umgeben ist und eine im Wesentlichen vertikale Öffnung (35) aufweist, in der der Stift (8) gleitet, wobei die innere Muffe (33) einen hinteren Abschnitt aufweist, der horizontal von einem Führungskanal (38) durchzogen ist, der zum einen in den hinteren Bereich der Buchse (9) und zum anderen in die Öffnung (35) der Muffe mündet, wobei der Führungskanal auf der gleichen Höhe angeordnet ist wie der zweite Arm (46) der Feder und sich über eine Breite erstreckt, die dem zweiten Arm (46) entspricht, wobei sich der Schlitten (48) im Führungskanal befindet, um mit dem zweiten Arm (46) der Feder zusammenzuwirken, wobei der hintere Abschnitt der Muffe (33) darüber hinaus eine horizontale Nut (42) aufweist, die den ersten Arm (45) der Feder aufnimmt und einen mittleren Abschnitt (43) umfasst, der in die Öffnung (35) der Muffe mündet, so dass der erste Arm (45) der Feder selbst einen mittleren Abschnitt aufweist, der in die Öffnung der Muffe hineinragt, um mit den Einkerbungen (30) auf der Rückseite des Stifts (8) zusammenzuwirken, wobei der Mantel (34) der Buchse die horizontale Nut derart bedeckt, dass der zweite Arm (46) der Feder in dieser Nut eingeschlossen ist, und wobei der hintere Abschnitt der Muffe darüber hinaus zwei vertikale Schlitze (39) aufweist, die mit dem Führungskanal (38) in Verbindung stehen und in Entsprechung zu den elastischen Stützen (47) der Feder angeordnet sind, so dass der zweite Arm (46) der Feder beim Einbau der Buchse (9) in den Führungskanal (38) eingefügt werden kann.

12. Sitz nach Anspruch 11, bei dem die innere Muffe (33) der Buchse einen aufgeweiteten oberen Kopf (36) aufweist, in dem der Führungskanal (38) geformt ist, der den Schlitten (48) aufnimmt, wobei die Muffe darüber hinaus ein unteres Ende aufweist, das mit Rasthaken (37) versehen ist, die den äußeren Mantel (34) mit der inneren Muffe verbinden können, wenn die innere Muffe in den äußeren Mantel eingeschoben ist.

13. Einheit, die eine Kopfstütze für einen Fahrzeugsitz nach einem der vorhergehenden Ansprüche bildet, wobei diese Einheit die Kopfstütze (15) selbst, den oder die Stift(e) (8) zum Tragen der Kopfstütze, die entsprechender) Buchse(n) (9), die Sperreinrichtung (15) und die elastischen Mittel (16) umfasst.

## Claims

1. A vehicle seat including a seat back (4) which is extended upwards by a headrest (5) provided with a front face (6) for supporting the back of a user's neck, said headrest being supported by at least one rigid stalk (8) which slides vertically in a socket (9) secured to the seat back (4) with a certain amount of clearance for pivoting forwards, the headrest (5) being urged angularly rearwards by a spring (15, 16; 45, 46) borne by the socket (9) and acting on the stalk (8) towards a rest position in which a stop member (15, 45) secured to the socket (9) prevents the stalk (8) from sliding vertically, said stop member co-operating, when the headrest (5) is in its rest position, with notches (18, 30) formed along the stalk, and the headrest being angularly displaceable forwards by a user together with the stalk (8) against the urging of the spring (15, 16; 45, 46) to an adjustment position in which the stalk (8) can slide vertically in the socket (9),
**characterized in that** the spring has first and second substantially horizontal limbs (15, 16; 45, 46) penetrating inside said socket on opposite sides of the stalk (8), the first limb (15, 45) being engaged substantially without clearance in the socket (9) and constituting the above-mentioned stop member, the second limb (16, 46) being received in the socket (9) with a certain amount of horizontal clearance and bearing resiliently against the stalk (8) urging it rearwards to press the notches (18, 30) of said stalk against the first limb (15, 45) of the spring.

2. A seat according to claim 1, in which the stop member (15, 45) is situated rearwardly of the stalk (8), the notches of the stalk facing rearwards.

3. A seat according to claim 1 or 2, in which the headrest (5) is supported by two parallel stalks (8) each sliding in a respective socket (9) having a spring and each having rearwardly facing notches (18, 30) that co-operate with the first limb (15, 45) of the corresponding spring.

4. A seat according to anyone of the preceding claims, in which the stalk (8) has a bottom portion with a single stop (21) for co-operating with the second limb (16, 46) of the spring, so as to prevent the stalk from escaping from the socket (9).

5. A seat according to claim 4, in which the socket (9) comprises a fixed portion (10, 11; 33, 34) and a slide (22, 48) which is displaceable relative to the fixed portion (10, 11; 33, 34) under drive from a pushbutton (27, 49) accessible to a user on top of the seat back (4), the slide (22, 48) being adapted to co-operate with the second limb (16, 46) of the spring to move said second limb horizontally when the pushbutton (27, 49) is actuated, thereby preventing any co-operation between the second limb (16, 46) of the spring and the stop (21) of the stalk.

6. A seat according to claim 5, in which the slide (22) is movable vertically relative to the fixed portion (10, 11) of the socket under drive from the pushbutton (27), the slide (22) having at least one cam surface (26a) suitable for co-operating with the second limb (16) of the spring to move said second limb horizontally away from the first limb (15) when the pushbutton (27) is actuated.

7. A seat according to any one of the preceding claims, in which the spring is in the form of a spring clip (14) folded substantially into a U-shape, the first and second limbs (15, 16) of the spring forming respective resilient limbs of the U-shape.

8. A seat according to any preceding claim, in which the socket (9) has both a bottom guide (12) which extends vertically over a short distance and receives the stalk (8) with little clearance, thus constituting a bottom pivot point for the stalk, and, above the bottom guide, a top portion (13) which receives the stalk with greater clearance and which has a horizontal inside section that is oblong with a long axis extending forwards and backwards.

9. A seat according to any preceding claim, in which the notches are constituted by superposed indentations (18) separated from one another by rounded projecting bulges (19) .

10. A seat according to any one of claims 1 to 8, in which the stalk (8) has a longitudinal axis and the notches (30) which cooperate with the first limb (45) of the spring are each in the form of a top stop face (31) which is substantially perpendicular to the axis of the stalk (8) and a bottom sloping face (32) with its high end forward of its low end.

11. A seat according to claim 5, in which the first and second limbs (45, 46) of the spring are interconnected on either side of the stalk (8) by two resilient legs (47) extending substantially vertically downwards from said first and second limbs (45, 46), the second limb (46) of the spring being situated at a higher level than the first limb (45), the socket (9) including an inner bushing (33) surrounded by a rigid outer jacket (34) and pierced by a substantially vertical well (35) in which the stalk (8) slides, the inner bushing (33) having a rear portion which is pierced horizontally by a guide channel (38) opening out both towards the rear of the socket (9) and into the well (35) of said bushing, the guide channel being situated at the same level as the second limb (46) of the spring and extending over a width that corresponds to said second limb (46), the slide (48) being mounted in the guide channel to be capable of co-operating with said second limb (46) of the spring, the rear portion of the bushing (33) also having a horizontal groove (42) which receives the first limb (45) of the spring and which presents a central portion (43) opening out into the well (35) of the bushing, such that the first limb (45) of the spring itself presents a central portion that projects into the well of the bushing to co-operate with the notches (30) formed in the rear face of the stalk (8), the jacket (34) of the socket covering said horizontal groove so as to hold the second limb (46) of the spring captive in said groove, and the rear portion of the bushing also having two vertical slots (39) which communicate with the guide channel (38) and which are disposed to correspond with the two resilient legs (47) of the spring so as to enable the second limb (46) of the spring to be engaged in said guide channel (38) during assembly of the socket (9).

12. A seat according to claim 11, in which the inner bushing (33) of the socket has an enlarged top head (36) in which the guide channel (38) which receives the slide (48) is formed, the bushing also having a bottom end provided with snap-fastening hooks (37) adapted to hold said inner bushing in the outer jacket (34) when the inner bushing is engaged in said outer jacket by being slid therealong.

13. An assembly forming a headrest for a vehicle seat according to any preceding claim, the assembly comprising the headrest (15) proper, the support stalk(s) (8) for said headrest, the corresponding socket(s) (9), the locking means (15), and the resilient means (16).
